# EUROPÄISCHE PATENTSCHRIFT

(11) **EP 2 234 931 B1**
(45) Veröffentlichungstag und Bekanntmachung des Hinweises auf die Patenterteilung: **24.10.2012**
(21) Anmeldenummer: 08866977.5
(22) Anmeldetag: 14.11.2008
(51) Int. Cl.: C04B 2/12, C04B 7/40

(54) **VERFAHREN ZUR HERSTELLUNG VON HYDRAULISCHEM KALK**
METHOD FOR THE MANUFACTURE OF HYDRAULIC LIME
PROCÉDÉ POUR LA PRODUCTION DE CHAUX HYDRAULIQUE

(30) Priorität: 21.12.2007 DE 102007062062
(43) Veröffentlichungstag der Anmeldung: 06.10.2010
(73) Patentinhaber: Fels-Werke GmbH, 38640 Goslar (DE)
(72) Erfinder: STUMPF, Thomas, 38667 Bad Harzburg (DE); BOENKENDORF, Ulf, 31188 Holle (DE); VERFÜRDEN, Martin, 38122 Braunschweig (DE)
(74) Vertreter: Solf, Alexander
(86) Internationale Anmeldenummer: PCT/EP2008/065544
(87) Internationale Veröffentlichungsnummer: WO 2009/083333

(56) Entgegenhaltungen:
- WO-A-91/01823
- DE-A1- 2 046 046
- GB-A- 919 108
- US-A- 4 135 940
- US-A- 5 685 709

## Beschreibung

Die Erfindung betrifft ein Verfahren zur Herstellung von hydraulischem Kalk in einem Kalkschachtofen.

Hydraulischer Kalk wird hauptsächlich in Kalkschachtöfen aus stückigem Kalkstein gebrannt.

Der Kalkstein zur Herstellung hydraulischer Kalke enthält neben Calciumcarbonat und Magnesiumcarbonat auch silikatische und aluminatische Bestandteile, weshalb das gebrannte Produkt neben Calciumoxid und Magnesiumoxid hydraulisch erhärtende Calciumsilikate und Calciumaluminate aufweist.

Kalkstein für hydraulische Kalke wird in Kalksteinbrüchen abgebaut und zu stückigem Gut gebrochen und mit bestimmten Körnungen, meist mit Körnungen zwischen 40 und 150 mm, dem Schachtofen aufgegeben. Im Schachtofen entsäuern die Carbonate bei Temperaturen um 1200°C zu Oxiden und aus den Silikaten bilden sich die hydraulisch abbindenden Calciumsilikate und Calciumaluminate. Der gebrannte hydraulische Kalk verlässt den Schachtofen stückig und wird in der Regel gebrochen und fein gemahlen.

Die Qualität des gebrannten hydraulischen Kalkes ist zum einen abhängig von der Schachtofenleistung. Es ist nicht immer gewährleistbar, dass nach einer Ofenreise die großen Kalkstücke genauso homogen gebrannt sind wie die kleineren Körner, so dass der gemahlene Branntkalk noch ungebrannte Bestandteile aufweisen kann. Des Weiteren ist die Qualität abhängig von der Ausgangszusammensetzung des Kalkgesteins. Der Kalkstein ist ein natürliches Produkt, das bezüglich seiner chemischen und mineralogischen Zusammensetzung erheblich schwanken kann, woraus unterschiedliche Branntkalkqualitäten resultieren. Man kann dem zwar durch Mischungen von Kalksteinen unterschiedlicher Zusammensetzung begegnen, diese Maßnahme ist aber sehr aufwändig und meist nicht sehr erfolgreich.

Aufgabe der Erfindung ist, mit einfachen Mitteln hochwertige hydraulische Kalke vorbestimmter und gleich bleibender Qualität zu erzeugen.

Diese Aufgabe wird durch die Merkmale des Anspruchs 1 gelöst. Vorteilhafte Weiterbildungen der Erfindung werden in den Unteransprüchen gekennzeichnet.

Nach der Erfindung wird somit als Rohstoff feinteiliges Gesteinsmaterial, mit Korngrößen von 99 Gew.-% unter 500 µm nach erfolgter mineralogischer und chemischer Analyse so ausgewählt und/oder aus mehreren der Materialien homogenisiert zusammengestellt, dass es bezüglich der Carbonate und der Tonminerale einer Zusammensetzung entspricht, aus der nach dem Brennen im Schachtofen ein gebrannter hydraulischer Kalk vorbestimmter mineralischer und chemischer Zusammensetzung und damit mit vorbestimmten Eigenschaften bezüglich des Ablöschens und des hydraulischen Abbindens bzw. des Erhärtens resultiert. Dabei kann zur Gewährleistung der gewünschten Mineralausbildung beim Brennen und der Qualität des gebrannten hydraulischen Kalkes den Rohstoffmischungen gebrannter Kalk, insbesondere Weißfeinkalk und/oder gelöschter Kalk, insbesondere Weißfeinkalkhydrat beigegeben werden. Sofern erforderlich, können zur Optimierung der chemischen Zusammensetzung auch andere Gesteinsmehle z. B. Schiefer oder ungemahlene Mergel zugesetzt werden. ,

Die feinteiligen Rohmaterialien werden erfindungsgemäß mit Wassergehalten zwischen 6 und 20 Gew.-%, insbesondere zwischen 8 und 10 Gew.-% verwendet und zu z. B. brikettartigen kompakten Presskörpern mit Stückgrößen zwischen 20 und 60 cm³, insbesondere zwischen 40 und 50 cm³ gepresst. Diese Briketts bzw. Presskörper, deren Raumform beliebig sein kann, werden in einem Schachtofen üblicher Bauart gebrannt, wobei der überwiegende Anteil der Presskörper während der Ofenreise nicht zerbricht. Demgemäß werden die Pressdrücke für die Festigkeiten der Presskörper so hoch gewählt, dass die Raumform der geformten Presskörper während der Ofenreise erhalten bleibt. Nach der Ofenreise werden die gebrannten Körper gemahlen, woraus der hydraulische Kalk üblicher Feinheit resultiert.

Wesentlich ist, dass nach dem erfindungsgemäßen Verfahren auf die Qualität des hydraulischen Kalkes mit einfachen Mitteln Einfluss genommen werden kann. Zum einen kann dies durch die Rohstoffanalyse und anschließende Rohstoffauswahl geschehen. Zum anderen ist dies gewährleistbar durch die wählbare gleichförmige Raumform und Größe der Presskörper, auf die die Brennbedingungen im Schachtofen eingestellt werden können, so dass vollständige, chemische Reaktionen bei üblichen hohen Brenntemperaturen homogen im gesamten Presskörper gewährleistbar sind und sich die gewünschten Minerale durchgehend im gesamten Presskörper bilden, was beim bekannten Kalkbrennen aus stückigem Kalkstein meist nicht möglich ist.

Dabei ist es nicht erforderlich, Presskörper gleicher Raumform und Größe für eine Ofen charge zu verwenden. Vielmehr kann mit diesen Parametern auf die Strömungsbedingungen und die Energieverteilung im Schachtofen reagiert werden.

Zur Herstellung der Presskörper werden z. B. auf dem Markt erhältliche Brikettpressen verwendet.

Das folgende Beispiel verdeutlicht, dass mit einer vorgegebenen chemischen und mineralogischen Analyse der feinteiligen Rohstoffe aus daraus gepressten Briketts hydraulische Kalke vorbestimmter mineralischer Zusammensetzung herstellbar sind.

Es wurden Briketts aus Rohstoffen mit folgenden Zusammensetzungen gemäß Tabelle 1 hergestellt:

**Tabelle 1**

| Komponente | Anteil Gew.-% |
|---|---|
| Filterkuchen | 50 - 100 |
| Branntkalk | 0 - 50 |
| Kalksteinmehl | 0 - 30 |

Diese Rohstoffe wiesen die folgende mineralogische Zusammensetzung gemäß Tabelle 2 auf (Angaben in Gew.-%):

**Tabelle 2**

| | Filterkuchen | Branntkalk | Kalksteinmehl |
|---|---|---|---|
| Calcit/Dolomit | 65-80 | < 5 | > 97 |
| Calciumoxid | | > 85 | |
| Calciumhydroxid | | < 8 | |
| Kaolinit | 2-7 | | |
| Illit/Glimmer | 8-12 | | |
| Illit/Smektit | 2-6 | | < 1 |
| Chlorit | 1-4 | | |
| Quarz | 3-7 | | < 1 |
| Feldspat | < 1 | | < 1 |
| Goethit | 1-4 | | |

Der Wassergehalt der Briketts betrug < 10 Gew.-% und die Festigkeit, beurteilt nach dem Shatter-Test, lag bei > 75 %. Die Größe der Briketts lag bei 10, 20, 50 und 60 cm³.

Die Briketts wurden bei 1200°C 2 Stunden und bei 1300°C ebenfalls 2 Stunden gebrannt, woraus hydraulische Kalke mit der folgenden mineralogischen Zusammensetzung gemäß Tabelle 3 in Gew.-% resultierten:

**Tabelle 3**

| Brenn-temperatur | CaO | C₃A | C₂S | C₃S | C₄AF | Ca (OH)₂ | Quarz |
|---|---|---|---|---|---|---|---|
| 1300°C | 40 | 8 | 13 | 27 | 5 | 6 | - |
| 1200°C | 50 | 6 | 31 | - | 11 | 2 | < 1 |

Aus den Ergebnissen ist erkennbar, dass die Mineralphasenzusammensetzung der gebrannten hydraulischen Kalke allein durch die Brennbedingungen gezielt gesteuert werden können, weil die Briketts eine genau festgelegte chemische und mineralogische Zusammensetzung aufweisen.

Die feinteiligen Rohstoffe für die Brikettherstellung werden erfindungsgemäß insbesondere mit folgenden Körnungen gemäß Tabelle 4 in Gew.-% zusammengestellt:

**Tabelle 4**

| Siebrückstand | Filterkuchen | Kalksteinmehl | Branntkalk |
|---|---|---|---|
| > 2,0 mm | - | - | 0-10 % |
| > 1,0 mm | - | - | 0-35 % |
| > 0,25 mm | 0-1 % | 0-1 % | 0-50 % |
| > 0,09 mm | 1-2 % | 1-10 % | 5-95 % |

Eine Besonderheit der Erfindung liegt darin begründet, dass es durch das erfindungsgemäße Verfahren möglich ist, feinteilig anfallende Neben- oder Anfallprodukte der Steine und Erden-Industrie als Rohstoffe zu verwenden, die in großen Mengen zur Verfügung stehen.

Bei der Herstellung von gebrannten Kalken aus natürlichen Rohstoffen, z. B. Kalkstein oder bei der Splittherstellung aus Kalkgesteinen oder anderen Gesteinen oder aus ähnlichen Prozessen der Steine und Erden-Industrie ist es bedingt durch das natürliche Vorkommen des Rohstoffs und qualitätsbedingt erforderlich, den verwendeten Rohstoff, z. B. den Kalkstein, zu waschen. Die hierbei anfallenden Waschrückstände weisen hohe Anteile an Tonmineralen und bei Kalkwerken auch sehr hohe Calcium-/Magnesiumcarbonat-Anteile und einen sehr hohen Feinanteil auf. In der Regel werden diese Waschrückstände keiner höherwertigen Verwendung zugeführt. Sie werden meist nach vorheriger teilweiser Entwässerung, beispielsweise in Kammerfilterpressen, wobei Filterkuchen anfallen, deponiert oder in Klärteichen sedimentiert.

Diese bereits feinteiligen Neben- oder Anfallprodukte, die der Kornverteilung gemäß Tabelle 4 entsprechen, können nunmehr nach dem erfindungsgemäßen Verfahren als Rohstoffe zur Herstellung von hydraulischen Kalken verwendet werden. Dabei wird zunächst die chemische und mineralogische Analyse erstellt und die Rohstoffgemenge werden so zusammengestellt, dass sie in ihrer chemischen und mineralogischen Zusammensetzung den Werten in den folgenden Tabellen 5 und 6 entsprechen. Man kann dabei z.B. die Filterkuchen der Kammerfilterpressen oder aus einer Deponie oder einem Klärteich entnommenes Material verwenden und den Wassergehalt zum Pressen entweder durch Wasserzugabe oder durch einen weitergehenden Wasserentzug einstellen. In letzterem Fall eignet sich insbesondere die Zugabe von Branntkalk, der durch Ablöschen Wasser chemisch bindet und außerdem zum gewünschten Chemismus und zur gewünschten mineralogischen Zusammensetzung der Rohstoffe und damit zur gewünschten mineralogischen Zusammensetzung der gebrannten Kalke beitragen kann.

Es liegt im Rahmen der Erfindung, die Neben- oder Anfallprodukte nicht nur untereinander und/oder mit Branntkalk und/oder mit abgelöschtem Kalk so zu mischen, dass sich die gewünschten Zusammensetzungen ergeben, sondern auch mit feinteiligen, bezüglich ihrer Analyse bekannten Rohstoffen z. B. gezielt mit feinteiligen Tonen zu versetzen.

Die folgenden Beispiele sollen die Erfindung bezüglich der erfindungsgemäßen Verwendung von Neben- oder Anfallprodukten näher erläutern.

### Beispiel 1

In einem Kalkwerk fallen aufgrund von Waschrückständen aus Kalkgestein Filterkuchen folgender Zusammensetzung gemäß Tabelle 5 in Gew.-% an:

**Tabelle 5**

| | CaCO₃ | CaO | MgO | SiO₂ | Fe₂O₃ | Al₂O₃ | SO₃ |
|---|---|---|---|---|---|---|---|
| Mittelwert | 75 | 42 | 0,5 | 11,6 | 2,2 | 4,2 | 0,1 |
| Minimalwert | 62 | 35 | 0,4 | 5,1 | 0,9 | 1,5 | <0,01 |
| Maximalwert | 90 | 50 | 1,0 | 16,6 | 3,8 | 6,5 | 0,25 |

Der Wassergehalt liegt bei etwa 15 Gew.-% und damit für die Herstellung von Presskörpern zu hoch. Mit einem Zusatz von 18 - 22 Gew.-% Weißfeinkalk wird die Feuchte auf 8 Gew.-% reduziert.

### Beispiel 2

Aus einem Klärteich der Steine und Erden-Industrie stammen Waschrückstände mit folgender Zusammensetzung gemäß Tabelle 6 in Gew.-%:

**Tabelle 6**

| | CaCO₃ | CaO | MgO | SiO₂ | Fe₂O₃ | Al₂O₃ | SO₃ |
|---|---|---|---|---|---|---|---|
| Mittelwert | 68 | 38 | 0,7 | 18,7 | 3,5 | 7,2 | 0,1 |
| Minimalwert | 58 | 32 | 0,5 | 12,5 | 2,5 | 5,0 | <0,01 |
| Maximalwert | 82 | 46 | 1,0 | 24,0 | 4,5 | 9,0 | 0,3 |

Der Wassergehalt entspricht dem gemäß Beispiel 1. Die Reduzierung erfolgt mit Wasser reduzierenden Zusätzen z. B. mit Branntkalk.

Mit der Erfindung ist es somit insbesondere gelungen, ein direkt bei der Kalkherstellung anfallendes Waschprodukt und/oder bereits deponierte feinteilige Nebenprodukte oder Abfälle, insbesondere aus Waschrückständen, zur Herstellung von hydraulischen Kalken zu verwenden, wobei auf einfache Weise die mineralogischen Zusammensetzungen und damit die Eigenschaften der gebrannten hydraulischen Kalke gezielt und steuerbar und jederzeit reproduzierbar darstellbar sind.

Der erfindungsgemäß hergestellte hydraulische Kalk ist ein erbrannter, sogenannter natürlicher hydraulischer Kalk. Seine Verwendungen sind im wesentlichen der Bau- bzw. Baustoffindustrie zuzuordnen. In der Baustoffindustrie ist dies neben Mörtel, Betonindustrie und Bodenstabilisierung die Herstellung von Kalksandsteinen, insbesondere aber von Porenbeton und Schaumbeton, wobei Kalk als hydrothermal reagierende CaO-Komponente verwendet wird. Aufgrund der einstellbaren hydraulischen Eigenschaften mit dem erfindungsgemäßen Verfahren ist der hydraulische Kalk dabei auch geeignet, in Porenbeton- oder Schaumbetonmischungen nicht nur den Weißfeinkalk, sondern auch den üblicherweise eingesetzten, insbesondere für die Grünfestigkeit des Porenbetonkuchens benötigten Zement zu substituieren. In der Bauindustrie wird der erfindungsgemäße hydraulische Kalk als Bindemittel in Putz- und Mauermörteln eingesetzt, wobei insbesondere die Denkmalpflege natürliche hydraulische Kalke favorisiert, da diese gute, den historischen Baustoffen angepasste physikalische und mechanische sowie chemische Eigenschaften aufweisen.

Porenbeton und Schaumbeton sind dampfgehärtete poröse Baustoffe mit einer Rohdichte von z. B. 300 bis 800 kg/m³. Sie werden aus den Rohstoffen gebrannter Kalk, in der Regel hochwertiger Weißfeinkalk mit CaO-Gehalten von über 90 Gew.-%, Zement, in der Regel Portlandzement, kieselsäurereiches Sandmehl und Wasser hergestellt. In der Regel wird zusätzlich ein Calciumsulfat in Form von Anhydrit oder Dihydrat verwendet. Die Rohstoffe werden zu einer Suspension vermischt, die durch den Zusatz eines Treibmittels, z.B. Aluminiumpulver oder Aluminiumpaste, die in der wässrigen alkalischen Suspension zur Abspaltung gasförmigen Wasserstoffs führen, oder eines Schaums ein poriges Gefüge erhält, das nach Erlangen einer geeigneten Grünfestigkeit in Folge Abbindens des Zements sowie Schneiden in bestimmte Steinformate durch Härten in speziellen Dampfdruckkesseln, den Autoklaven, stabilisiert wird bzw. seine endgültigen Eigenschaften als wärmedämmender Mauerwerksbaustoff erhält.

Nach der Erfindung werden hydraulische Kalke mit gezielt eingestellten chemischen Zusammensetzungen und daraus resultierend chemischen und physikalischen Eigenschaften verwendet. Der CaO-Gehalt der Kalke soll in der Größenordnung von 55 bis 80 Gew.-% liegen. Die Zusammensetzung ist insofern an die Anforderungen der Porenbetonherstellung anpassbar. Insbesondere ist wesentlich, dass der für die Grünfestigkeit des Porenbetonkuchens benötigte Zement durch erfindungsgemäßen hydraulischen Kalk substituiert werden kann.

Die Herstellung dieses hydraulischen Kalkes, der es erlaubt, den Zement zu ersetzen und der es zudem erlaubt, den Weißfeinkalk zumindest teilweise zu ersetzen, weil der erfindungsgemäße hydraulische Kalk eine im Hydrothermalprozess reaktionsfähige CaO-Komponente aufweist, ist oben beschrieben worden. Je nach Anforderung an die Eigenschaften des Kalkes für die Verwendung zur Herstellung von Porenbeton oder Schaumbeton kann die Brenntemperatur entsprechend gewählt werden. Einflussfaktoren für die Eigenschaften des hydraulischen Kalkes, insbesondere bezüglich des reaktionsfähigen CaO-Gehalts, sind neben der Zusammensetzung auch die Brenntemperatur und die Brenndauer, so dass je nach gewählten Brennbedingungen C₃S oder C₂S als Klinkerphasen erzeugt werden können.

Der so hergestellte hydraulische Kalk kann nach Mahlen und gegebenenfalls Löschen als Bindemittel bei der Porenbeton- und Schaumbetonherstellung eingesetzt werden. Bedingt durch die Qualitätsgewährleistung ist der beschriebene hydraulische Kalk ausgezeichnet für die Anwendung in der Porenbetonindustrie geeignet, da diese sehr hohe Anforderungen an die Gleichmäßigkeit der eingesetzten Rohstoffe stellt. Anwendungstechnische Versuche zeigen, dass der hydraulische Kalk in geeigneter Mischung mit Weißfeinkalk und/oder Weißkalkhydrat in einer Porenbeton- oder Schaumbetonrohmasse bei vorzugsweise vollständigem Verzicht auf Zement im Verlauf einer Reifephase in Folge seiner hydraulischen Eigenschaften eine Grünfestigkeit entwickelt, welche die weitere Verarbeitung, z. B. das Schneiden und die Dampfhärtung zu Porenbeton erlaubt.

Folgende Mischungen eignen sich besonders gut zur Herstellung von Porenbeton oder Schaumbeton:

**Tabelle 7**

| Bindemittel | Anteil am Feststoff Gew.% |
|---|---|
| Natürlicher hydraulischer Kalk, erfindungsgemäß hergestellt | 10 bis 30 |
| Weißfeinkalk | 5 bis 25 |
| Wasser/Feststoff-Verhältnis | 0,4 bis 2,0 |

| | |
|---|---|
| Rest: SiO₂-Komponente bzw. -Komponenten und Al-Komponente. | |

Der erfindungsgemäß hergestellte hydraulische Kalk weist, wie beschrieben, freies CaO auf. Da in den gebrannten Briketts dieser freie Kalk vorhanden ist, kann eine Teilmenge davon mit Luftfeuchtigkeit reagieren und Kalkhydrat bilden. Diese Reaktion geht mit einer erheblichen Volumenvergrößerung einher und führt zu einem Zerfall der Briketts. Dieser durch Lagerung in einer bestimmten Zeitspanne herbeigeführte Effekt erleichtert das Mahlen des gebrannten Produkts, so dass erheblich Mahlenergie eingespart werden kann. Demgemäß ist auch ein Merkmal des erfindungsgemäßen Verfahrens, die gebrannten Briketts abzulagern derart, dass die Luftfeuchtigkeit oder zugegebenes Wasser einen zumindest teilweisen Zerfall der Briketts bewirkt.

## Patentansprüche

1. Verfahren zur Herstellung von hydraulischem Kalk in einem Schachtofen durch Brennen bei Temperaturen über 1100°C von stückigem, hauptsächlich Calciumcarbonat und Silicate sowie Aluminate enthaltendem Rohstoffgut, das nach der Ofenreise als ofenfallendes stückiges gebranntes Gut im wesentlichen Calciumoxid, Calciumsilicate sowie Calciumaluminate und Calciumaluminatferrit aufweist,
**dadurch gekennzeichnet, dass**
a) feinteilige Gesteinsmaterialien in Form von Waschrückständen aus Waschprozessen von Kalkgesteinen, jeweils mit Korngrößen 99 Gew-% unter 500 µm, als Rohstoffe eingesetzt werden,
b) die feinteiligen Gesteinsmaterialien mineralogisch und chemisch analysiert werden,
c) aus den feinteiligen Gesteinsmaterialien ein homogenisiertes Rohstoffgut so zusammengestellt wird, dass das Rohstoffgut bezüglich der Carbonate und der Tonminerale der Waschrückstände einer Zusammensetzung entspricht, aus der nach dem Brennen im Schachtofen ein gebrannter hydraulischer Kalk vorbestimmter mineralogischer und chemischer Zusammensetzung und damit vorbestimmter Eigenschaften bezüglich des Ablöschens und des hydraulischen Abbindens sowie des Erhärtens resultiert,
d) das Rohstoffgut auf einen Wassergehalt zwischen 6 und 20 Gew.-% eingestellt und zu festen Körpern gepresst wird.

2. Verfahren nach Anspruch 1,
**dadurch gekennzeichnet, dass** die feinteiligen Gesteinsmaterialien zur Herstellung des Rohstoffgutes mit Branntkalk und/oder gelöschtem Kalk versetzt werden.

3. Verfahren nach Anspruch 1 oder 2,
**dadurch gekennzeichnet dass** die feinteiligen Gesteinsmaterialien zur Herstellung des Rohstoffgutes mit in ihrer Analyse bekannten feinteiligen Rohstoffen, z. B. mit Tonen oder Kalksteinmaterial, versetzt werden.

4. Verfahren nach einem oder mehreren der Ansprüche 1 bis 3,
**dadurch gekennzeichnet, dass** Presskörper einer Stückgröße zwischen zwischen 20 und 60 cm³, insbesondere zwischen 40 und 50 cm³, gepresst werden.

5. Verfahren nach einem oder mehreren der Ansprüche 1 bis 4,
**dadurch gekennzeichnet, dass** unterschiedlich große Presskörper, insbesondere aus identischen Rohstoffen, hergestellt werden.

6. Verfahren nach einem oder mehreren der Ansprüche 1 bis 5,
**dadurch gekennzeichnet, dass** Presskörper unterschiedlicher Raumform, insbesondere aus identischen Rohstoffen, hergestellt werden.

7. Verfahren nach einem oder mehreren der Ansprüche 1 bis 6,
**dadurch gekennzeichnet, dass** zur Herstellung der Presskörper Walzenpressen verwendet werden.

8. Verfahren nach einem oder mehreren der Ansprüche 1 bis 7,
**dadurch gekennzeichnet, dass** als Rohstoffe Materialien mit folgenden Kornverteilungen in Gew.-% verwendet werden:
| Siebrückstand | Filterkuchen | Kalksteinmehl | Branntkalk |
|---|---|---|---|
| > 2,0 mm | - | - | 0-10 % |
| > 1,0 mm | - | - | 0-35 % |
| > 0,25 mm | 0-1 % | 0-1 % | 0-50 % |
| > 0,09 mm | 1-2 % | 1-10 % | 5-95 % |

9. Verfahren nach Anspruch 8,
**dadurch gekennzeichnet, dass** Rohstoffe mit folgender Zusammensetzung in Gew.-% verwendet werden:
| | Filterkuchen | Branntkalk | Kalksteinmehl |
|---|---|---|---|
| Calcit/Dolomit | 65-80 | < 5 | > 97 |
| Calciumoxid | | > 85 | |
| Calciumhydroxid | | < 8 | |
| Kaolinit | 2-7 | | |
| Illit/Glimmer | 8-12 | | |
| Illit/Smektit | 2-6 | | < 1 |
| Chlorit | 1-4 | | |
| Quarz | 3-7 | | < 1 |
| Feldspat | < 1 | | < 1 |
| Goethit | 1-4 | | |

10. Verfahren nach einem oder mehreren der Ansprüche 1 bis 9,
**dadurch gekennzeichnet, dass** Briketts aus folgenden Rohstoffen mit folgenden Zusammensetzungen in Gew.-% hergestellt werden:
| Komponente | Anteil Gew.-% |
|---|---|
| Filterkuchen | 50 - 100 |
| Branntkalk | 0 - 50 |
| Kalksteinmehl | 0 - 30 |

11. Verfahren nach einem oder mehreren der Ansprüche 1 bis 10,
**dadurch gekennzeichnet, dass** die Waschrückstände in Filterpressen zu Filterkuchen entwässert und anschließend bis zur Pressfähigkeit für das stückige Rohstoffgut getrocknet oder durch Wasser bindende Zusätze weitergehend entwässert werden, insbesondere bis auf eine Restfeuchte < 10 Gew.-%.

12. Verfahren nach Anspruch 11,
**dadurch gekennzeichnet, dass** Branntkalk, insbesondere gebrannter Weißfeinkalk und/oder gelöschter Kalk, für die Entwässerung verwendet wird.

13. Verfahren nach einem oder mehreren der Ansprüche 10 bis 12,
**dadurch gekennzeichnet, dass** die ofenfallenden Briketts Feuchtigkeit ausgesetzt werden derart zumindest ein teilweiser Zerfall, dassvaufgrund einer Reaktion von in den Briketts enthaltenem CaO zu Ca(OH)₂ erfolgt.

14. Verfahren nach einem oder mehreren der Ansprüche 1 bis 13,
**dadurch gekennzeichnet, dass** das ofenfallende stückig gebrannte Gut unzerfallen oder zerfallen zu Bindemittelmehl vermahlen wird.

15. Verwendung des hydraulischen Kalks hergestellt nach einem oder mehreren der Ansprüche 1 bis 14,
zur Herstellung von Porenbeton oder Schaumbeton

16. Verwendung nach Anspruch 15,
**dadurch gekennzeichnet, dass** zur Herstellung von Poren- oder Schaumbeton folgende Zusammensetzungen der Rohmasse verwendet werden:
| Bindemittel | Anteil am Feststoff Gew.-% |
|---|---|
| Natürlicher hydraulischer Kalk, erfindungsgemäß hergestellt | 10 bis 30 |
| Weißfeinkalk | 5 bis 25 |
| Wasser/Feststoff-Verhältnis | 0,4 bis 2,0 |
Rest: SiO₂-Komponente bzw. -Komponenten und Al-Komponente.

17. Gebrannte Briketts, hergestellt nach einem Verfahren nach einem oder mehreren der Ansprüche 10 bis 13,
**gekennzeichnet durch**
die folgende mineralogische Zusammensetzung in Gew.-%:
| CaO | C₃A | C₂S | C₃S | C₄AF | Quarz |
|---|---|---|---|---|---|
| 35-55 | 4-10 | 10-40 | 0-30 | 4-15 | < 2 |

## Claims

1. A method for the production of hydraulic lime in a shaft kiln by calcining, at temperatures of over 1100°C, of feedstock in lump form containing mainly calcium carbonate and silicates together with aluminates which, after passing through the kiln, as a calcined material in lump form discharged from the kiln, substantially comprises calcium oxide, calcium silicates together with calcium aluminates and calcium aluminate ferrite,
**characterised in that**
a) finely divided rock materials in the form of washing residues from washing processes of limestone rocks, with particle sizes 99 wt.% below 500 µm in each case, are used as raw materials,
b) the finely divided rock materials are analysed mineralogically and chemically,
c) from the finely divided rock materials a homogenised feedstock is compounded such that, in terms of the carbonates and clay minerals of the washing residues, the feedstock corresponds to a composition which, after calcining in the shaft kiln, results in a calcined hydraulic lime having a predetermined mineralogical and chemical composition and thus predetermined properties relating to slaking and hydraulic setting as well as hardening,
d) the feedstock is adjusted to a water content of between 6 and 20 wt.% and compressed into solid bodies.

2. The method according to claim 1, **characterised in that** quicklime and/or slaked lime is added to the finely divided rock materials for producing the feedstock.

3. The method according to claim 1 or 2, **characterised in that** finely divided raw materials, the analysis of which is known, such as clays or limestone material, are added to the finely divided rock materials for producing the feedstock.

4. The method according to one or more of claims 1 to 3, **characterised in that** compacts with a size of between 20 and 60 cm³, in particular between 40 and 50 cm³, are pressed.

5. The method according to one or more of claims 1 to 4, **characterised in that** compacts of different sizes are produced, in particular from identical raw materials.

6. The method according to one or more of claims 1 to 5, **characterised in that** compacts of different three-dimensional shapes are produced, in particular from identical raw materials.

7. The method according to one or more of claims 1 to 6, **characterised in that** roller presses are used to produce the compacts.

8. The method according to one or more of claims 1 to 7, **characterised in that** materials with the following particle size distributions in wt.% are used as raw materials:
| Screenings | Filter cake | Limestone powder | Quicklime |
|---|---|---|---|
| > 2.0 mm | - | - | 0-10% |
| > 1.0 mm | - | - | 0-35% |
| > 0.25 mm | 0-1% | 0-1% | 0-50% |
| > 0.09 mm | 1-2% | 1-10% | 5-95% |

9. The method according to claim 8, **characterised in that** raw materials with the following composition in wt.% are used:
| | Filter cake | Quicklime | Limestone powder |
|---|---|---|---|
| Calcite / dolomite | 65-80 | < 5 | > 97 |
| Calcium oxide | | > 85 | |
| Calcium hydroxide | | < 8 | |
| Kaolinite | 2-7 | | |
| Illite / mica | 8-12 | | |
| Illite / smectite | 2-6 | | < 1 |
| Chlorite | 1-4 | | |
| Quartz | 3-7 | | < 1 |
| Feldspar | <1 | | < 1 |
| Goethite | 1-4 | | |

10. The method according to one or more of claims 1 to 9, **characterised in that** briquettes are produced from the following raw materials with the following compositions in wt.%:
| Component | Proportion, wt.% |
|---|---|
| Filter cake | 50-100 |
| Quicklime | 0-50 |
| Limestone powder | 0-30 |

11. The method according to one or more of claims 1 to 10, **characterised in that** the washing residues are dewatered in filter presses to form filter cakes and then dried until suitable for compressing for the lump feedstock or dewatered further by water-binding additives, in particular to a residual moisture content of < 10 wt.%.

12. The method according to claim 11, **characterised in that** quicklime, in particular calcined fine-ground high-calcium lime and/or slaked lime, is used for dewatering.

13. The method according to one or more of claims 1 to 12, **characterised in that** the briquettes discharged from the kiln are exposed to moisture in such a way that at least partial disintegration takes place owing to a reaction of CaO contained in the briquettes to form Ca(OH)₂.

14. The method according to one or more of claims 1 to 13, **characterised in that** the calcined material in lump form discharged from the kiln is ground into binder powder whether or not it has disintegrated.

15. Use of the hydraulic lime produced according to one or more of claims 1 to 14 for the production of autoclaved aerated concrete or foamed concrete.

16. The use according to claim 15, **characterised in that** the following compositions of the raw mixture are used for the production of autoclaved aerated or foamed concrete:
| Binder | Proportion of solids, wt.% |
|---|---|
| Natural hydraulic lime, produced according to the invention | 10 to 30 |
| Fine-ground high-calcium lime | 5 to 25 |
| Water/solids ratio | 0.4 to 2.0 |
| | |
|---|---|
| Balance: SiO₂ component or components and Al component. | |

17. Calcined briquettes produced by a method according to one or more of claims 1 to 13, **characterised by** the following mineralogical composition in wt.%:
| CaO | C₃A | C₂S | C₃S | C₄AF | Quartz |
|---|---|---|---|---|---|
| 35-55 | 4-10 | 10-40 | 0-30 | 4-15 | < 2 |

## Revendications

1. Procédé de production de chaux hydraulique dans un four à cuve par combustion à des températures supérieures à 1100°C d'un produit de matière brute en morceaux contenant principalement du carbonate de calcium, du silicate ainsi que l'aluminate, lequel produit de matière brute contient après son passage dans le four, en tant que morceaux de produit calciné sortant du four, essentiellement de l'oxyde de calcium, du silicate de calcium ainsi que de l'aluminate de calcium et de l'aluminoferrite de calcium,
**caractérisé en ce**
a) **qu'**on utilise comme matières brutes des matériaux pierreux à fines particules sous la forme de refus de lavage issus de processus de lavage de roches calcaires, présentant respectivement une granulométrie de 99 % en poids inférieure à 500 µm,
b) **qu'**on analyse les matériaux pierreux à fines particules d'un point de vue minéralogique et chimique,
c) **qu'**un produit de matière brute homogénéisé est composé des matériaux pierreux à fines particules de telle sorte que le produit de matière brute correspond par rapport aux carbonates et aux minéraux argileux des refus de lavage à une composition, à partir de laquelle on obtient après la combustion dans le four à cuve une chaux hydraulique calcinée présentant une composition minéralogique et chimique prédéfinie et ainsi des propriétés prédéfinies par rapport à l'extinction ou à la prise hydraulique ainsi qu'au durcissement,
d) **qu'**on ajuste le produit de matière brute sur une teneur en eau comprise entre 6 et 20 % en poids et qu'on le presse pour former des corps solides.

2. Procédé selon la revendication 1,
**caractérisé en ce que** les matériaux pierreux à fines particules sont mélangés à de la chaux vive et/ou à la chaux éteinte aux fins de la fabrication du produit de matière brute.

3. Procédé selon la revendication 1 ou 2,
**caractérisé en ce que** les matériaux pierreux à fines particules sont mélangés à des matières brutes à fines particules connues dans leur analyse, par exemple à des argiles ou à du matériau de roche calcaire aux fins de la fabrication du produit de matière brute.

4. Procédé selon l'une ou plusieurs des revendications 1 à 3,
**caractérisé en ce que** les pièces pressées présentant une taille de morceaux comprise entre 20 et 60 cm³, en particulier comprise entre 40 et 50 cm³, sont pressées.

5. Procédé selon l'une ou plusieurs des revendications 1 à 4,
**caractérisé en ce que** des pièces pressées de différentes tailles, constituées en particulier de matières brutes identiques, sont fabriquées.

6. Procédé selon l'une ou plusieurs des revendications 1 à 5, **caractérisé en ce que** des pièces pressées de différentes formes spatiales, constituées en particulier de matières brutes identiques, sont fabriquées.

7. Procédé selon l'une ou plusieurs des revendications 1 à 6,
**caractérisé en ce qu'**on utilise pour la fabrication des pièces pressées des presses à rouleaux.

8. Procédé selon l'une ou plusieurs des revendications 1 à 7,
**caractérisé en ce qu'**on utilise comme matières brutes des matériaux présentant les granulométries en % en poids suivantes :
| Refus de tamisage | Gâteau de filtration | Poudre de roche calcaire | Chaux vive |
|---|---|---|---|
| > 2,0 mm | - | - | 0-10% |
| > 1,0 mm | - | - | 0-35% |
| > 0,25 mm | 0-1% | 0-1% | 0-50% |
| > 0,09 mm | 1-2% | 1-10% | 5-95% |

9. Procédé selon la revendication 8,
**caractérisé en ce qu'**on utilise des matières brutes présentant la composition en % en poids suivante :
| | Gâteau de filtration | Chaux vive | Poudre de roche calcaire |
|---|---|---|---|
| Calcite/dolomite | 65-80 | <5 | > 97 |
| Oxyde de calcium | | > 85 | |
| Hydroxyde de calcium | | < 8 | |
| Kaolinite | 2-7 | | |
| Illite/mica | 8-12 | | |
| Illite/smectite | 2-6 | | < 1 |
| Chlorite | 1-4 | | |
| Quartz | 3-7 | | < 1 |
| Feldspath | < 1 | | < 1 |
| Goethite | 1-4 | | |

10. Procédé selon l'une ou plusieurs des revendications 1 à 9,
**caractérisé en ce qu'**on fabrique des briquettes constituées des matières brutes suivantes présentant les compositions en % en poids suivantes :
| Composant | Proportion en % en poids |
|---|---|
| Gâteau de filtration | 50-100 |
| Chaux vive | 0-50 |
| Poudre de roche calcaire | 0-30 |

11. Procédé selon l'une ou plusieurs des revendications 1 à 10,
**caractérisé en ce que** les refus de lavage sont asséchés dans des filtres-presses pour former des gâteaux de filtration puis sont séchés jusqu'à l'aptitude à se presser pour le produit de matière brute en morceaux ou sont asséchés par les additifs liés par l'eau, en particulier jusqu'à une humidité résiduelle de < 10 % en poids.

12. Procédé selon la revendication 11,
**caractérisé en ce qu'**on utilise de la chaux vive, en particulier de la chaux blanche fmement broyée calcinée et/ou de la chaux éteinte, pour l'assèchement.

13. Procédé selon l'une ou plusieurs des revendications 10 à 12,
**caractérisé en ce que** les briquettes sortant du four sont soumises à de l'humidité de telle manière que du fait d'une réaction avec le CaO contenu dans les briquettes, au moins une partie de la désagrégation a lieu en formant du Ca(OH)₂.

14. Procédé selon l'une ou plusieurs des revendications 1 à 13,
**caractérisé en ce que** les morceaux de produit calciné sortant du four sont moulus de manière décomposée ou non décomposée pour former une poudre de liant.

15. Utilisation de la chaux hydraulique fabriquée selon l'une ou plusieurs des revendications 1 à 14, aux fins de la production de béton poreux ou de béton cellulaire.

16. Utilisation selon la revendication 15,
**caractérisée en ce qu'**on utilise aux fins de la fabrication de béton poreux ou de béton cellulaire les compositions de masse brute suivantes :
| Liant | Proportion en matière solide % en poids |
|---|---|
| Chaux hydraulique naturelle fabriquée selon l'invention | 10 à 30 |
| Chaux blanche finement broyée | 5 à 25 |
| Rapport eau/matière solide | 0,4 à 2,0 |
| | |
|---|---|
| Résidu : composant ou composants SiO₂ et composants Al. | |

17. Briquettes calcinées, fabriquées selon un procédé selon l'une ou plusieurs des revendications 10 à 13,
**caractérisées par** la composition minéralogique en % en poids suivante :
| CaO | C₃A | C₂S | C₃S | C₄AF | Quartz |
|---|---|---|---|---|---|
| 35-55 | 4-10 | 10-40 | 0-30 | 4-15 | <2 |
